# FASCICULE DE BREVET EUROPEEN

(11) **EP 2 640 506 B1**
(45) Date de publication et mention de la délivrance du brevet: **15.10.2014**
(21) Numéro de dépôt: 11802481.9
(22) Date de dépôt: 18.11.2011
(51) Int. Cl.: B01J 13/02, B01J 13/22, A23P 1/04, C09B 67/00

(54) **NEO-MATERIAU HYBRIDE DE SEQUESTRATION DE PRINCIPE ACTIF A USAGE ALIMENTAIRE ET SON PROCEDE DE FABRICATION**
NEUES HYBRIDMATERIAL ZUR SEQUESTRIERUNG EINES WIRKSTOFFES FÜR LEBENSMITTEL UND VERFAHREN ZU SEINER HERSTELLUNG
NOVEL HYBRID MATERIAL FOR SEQUESTERING ACTIVE PRINCIPLE FOR FOOD USE AND PROCESS FOR PRODUCING SAME

(30) Priorité: 18.11.2010 FR 1059491
(43) Date de publication de la demande: 25.09.2013
(73) Titulaire: Laboratoires Phodé, 81150 Terssac (FR); Institut National Polytechnique de Toulouse, 31029 Toulouse Cedex 4 (FR)
(72) Inventeur: ECLACHE, Daniel, F-81990 Puygouzon (FR); ETIENNE, Pierre, F-81120 Lombers (FR); NOIROT, Virginie, F-81990 Puygouzon (FR); MOULOUNGUI, Zéphirin, F-31200 Toulouse (FR); BACHAR, Zébib, F-31000 Toulouse (FR)
(74) Mandataire: Hartmann, Jean-Luc
(86) Numéro de dépôt international: PCT/FR2011/052698
(87) Numéro de publication internationale: WO 2012/066258

(56) Documents cités:
- FR-A1- 2 937 507

## Description

La présente invention concerne un nouveau matériau hybride permettant la protection et la vectorisation de principes actifs présentant un intérêt dans le domaine de l'alimentation. Un procédé permettant d'obtenir un tel matériau, l'utilisation de ce matériau pour la réalisation de produits alimentaires ainsi que les produits alimentaires comprenant un tel matériau sont également des objets de la présente invention.

Les sociétés industrielles en nutrition animale, développent en permanence des produits innovants afin d'améliorer la production et la santé de l'animal. L'orientation actuelle dans ce domaine est de remplacer des principes actifs utilisés en nutrition animale et responsables de résistances avérées chez l'animal et potentielles chez l'Homme via les résidus présents dans les produits animaux par des substances d'origine naturelle ou "identiques naturelles", limitant les risques pour l'homme et écologiquement inertes.

Une classe de composés particulièrement intéressants sur le plan alimentaire et permettant d'améliorer les qualités des produits finis est représentée par les antioxydants. Ces molécules sont capables de neutraliser ou de réduire les dommages causés par les radicaux libres dans l'organisme, responsables de l'oxydation des cellules et du processus de vieillissement.

Les antioxydants présentent des intérêts à différents niveaux. Sur le plan de l'alimentation et des propriétés organoleptiques, ils empêchent le rancissement des produits alimentaires (Liger J. (1991) « The use of antioxydants in foods. In Free Radicals and food Additives. Edited by O.I. Aruoma and B. Halliwell. Pp.121-150. Taylor and Francis, London). Sur le plan biologique, ils peuvent aider à protéger le corps humain contre des dommages par des espèces d'oxygène réactif ROS (ROS étant un terme collectif employé pour inclure les radicaux de l'oxygène (O₂˙, OH˙, RO₂˙, RO˙ etc) et plusieurs oxydants non radicaux, tels que HOCl, H₂O₂, O₃ and ONOO⁻. Le terme « réactif » est un terme relatif, O₂˙⁻ est par exemple plus réactif que O₂ mais beaucoup moins que le radical hydroxyl OH˙ or HOCl).

Les huiles essentielles contiennent des antioxydants. Elles se présentent sous la forme de liquides huileux aromatiques, obtenus à partir des plantes (fleurs, bourgeons, graines, feuilles, brindilles, écorce, herbes, bois, fruits et racines). Un corps étendu de recherche a démontré que les huiles essentielles et leurs composants principaux possèdent une gamme d'activité biologique, qui peut être de grande importance dans plusieurs domaines de la chimie alimentaire à la pharmacie (Cristiani, M., D'Arrigo, M., Mandalari, G., Castelli, F., Sarpietro, M. G., & Micieli, D. , et al. (2007). Interaction of four monoterpenes contained in essential oils with model membranes: Implications for their antibacterial activity. Journal of Agricultural and Food Chemistry, 55, 6300-6308).

Il est bien connu que les huiles essentielles obtenues à partir de l'origan (Origanum vulgare, Lippia spp.) une épice méditerranéenne traditionnelle, possèdent une activité antimicrobienne forte due à leurs contenus très élevés de monoterpènes et composés oxygénés, tels que le c-terpinène, et p-cymene, thymol et carvacrol (Chorianopoulos, N., Kalpoutzakis, E., Aligianis, N., Mitaku, S., Nychas, G. J., & Haroutounian, S. (2004). Essential oils of Satureja, Origanum and Thymus species chemical composition and antibacterial activities against foodborne pathogen. Journal of Agricultural and Food Chemistry, 52, 8261-8267). Cette activité antimicrobienne se traduit à la fois par un effet létal ou bactéricide, mais aussi par une inhibition de la croissance ou effet bactériostatique.

Le carvacrol est également un composant commun d'huiles d'origan, de thym, et de marjolaine, généralement reconnu comme additif sanitaire non toxique. Il est fréquemment employé dans plusieurs produits comme assaisonnement et/ou comme agent antimicrobien, apparence à un large-spectre d'activités contre des bactéries, des levures et des mycètes (Knowles, J. R., Roller, S., Murray, D. B., & Naidu, A. S. (2005). Antimicrobial action of carvacrol at différent stages of dual species biofilm development by Staphylococcus aureus and Salmonella enterica Serovar Typhimurium. Applied and Environmental Microbiology, 71(2), 797-803).

Les huiles essentielles sont hydrophobes et leur site primaire d'activité est la membrane microbienne. Ces sites s'accumulent dans la bicouche lipidique des cellules selon un coefficient de cloison qui est spécifique pour chaque composé appliqué, menant à la rupture de la structure membranaire et son disfonctionnement (Pol, I. E., & Smid, E. J. (1999). Combined action of nisin and carvacrol on Bacillus cereus and Listeria monocytogenes. Letters in Applied Microbiology, 29, 166-170). L'activité antimicrobienne des huiles essentielles liée à leurs contenus en monoterpènes résulte du caractère lipophile de ces composés qui agissent en perturbant la membrane cytoplasmique microbienne, celle-ci perdant ainsi son imperméabilité élevée pour les protons et les grands ions.

Un grand nombre d'études *in vitro* ont montré que l'huile d'origan et ses constituants les plus actifs, le carvacrol et le thymol, détruisaient un vaste éventail de bactéries et de champignons, produisant des effets équivalents voire supérieurs à certains antibiotiques tels que l'amphotéricine B et la nystatine face aux infections par *Candida albicans* (Baratta M.T. et al., Chemical composition and antioxidative activity of laurel, sage rosemary, oregano and coriander essential oils, J. Essent. oil Res., 1998, 10: 618-27).

Malheureusement, ces composés naturels sont biologiquement instables, insolubles dans l'eau et mal distribués pour viser les sites d'actions généralement localisés au niveau intestinal ce qui suppose un passage stomacal synonyme de dégradation des propriétés de ces composés. Quelques méthodes originales ont été présentées afin d'améliorer la stabilité et la disponibilité biologique de ces composés, parmi lesquelles l'encapsulation liposomique (Shoji, Y., & Nakashima, H. (2004). Nutraceutics and delivery systems. Journal of Drug Targeting, 12(6), 385-391).

La micro-encapsulation réduit la réactivité avec l'environnement extérieur (l'eau, l'oxygène, lumière), elle diminue l'évaporation et la vitesse de transfert avec celui-ci. Elle favorise aussi la capacité à contrôler, à masquer le goût, et à augmenter la dilution pour réaliser une distribution uniforme dans les produits finis une fois le composé naturel (huile essentielle) utilisé en petite quantité (Gibbs, B. F., Kermasha, S., Alli, I., & Mulligan, C. N. (1999). Encapsulation in food industry: A review. International Journal of Food Science and Nutrition, 50(3), 213-224). L'utilisation des liposomes est donc une solution avantageuse permettant de préserver la saveur des aliments et d'assurer une protection contre les phénomènes d'oxydation.

Des travaux visant à identifier des supports permettant de préserver les propriétés des composés actifs des huiles essentielles et d'obtenir un effet optimal au niveau des sites d'action ont ainsi été réalisés.

L'adsorption des molécules de types phénoliques sur des supports basiques de type carbonates de césium (Cs₂CO₃) a ainsi été étudiée dans le cadre de la réaction de Wittig-Horner dans des conditions d'interfaces solide-liquide (J .V. Sinisterra, J. Barrios, Z. Mouloungui, M. Delmas, and A. Gaset, Bull. Soc. Chim Belg., vol. 100/n°3/1991). Les auteurs décrivent en détails les conditions d'adsorption des molécules de type phénols, aldéhydes phénoliques et aldéhydes linéaires sur 3 types de supports : carbonate de césium (Cs₂CO₃.3H₂O), carbonates de potassium (K₂CO₃.1H2O, K₂CO₃.5H2O), et hydroxyde de baryum activé (C-200). Il en résulte, que la structure microcristalline du support utilisé est le facteur déterminant de l'activité catalytique, par conséquent, du rendement de la réaction étudiée. Aussi ils concluent que les carbonates hydratés présentent des sites fortement réducteurs (OH- ou O⁻) suite à la présence d'eau dans leur maille cristalline, ce qui signifie un processus catalytique de transfert d'électron (ETC), qui produira la réaction parasite de Cannizzaro.

L'encapsulation du carvacrol sous formulations galéniques, et sa libération in vitro et/ou in vivo a été largement étudiée (S. Boisen and J.A. Fernandez, Amin. Feed Sci. Techn. 1995, 51, 29-43), (N.A. Cave, Poult. Sci., 1988, 67, 78-87), (M. Clunies and S. Leeson, Poult. Sci., 1984, 63, 89-96), (V. Malathi and G. Devegowda, Poult. Sci., 2001, 80, 302-305), (K. Sakamoto and T. Asano, Br. J. Nutri. 1980, 43, 389). Diverses techniques d'encapsulation du carvacrol ont été développées par des sociétés chimiques industrielles. Le carvacrol a été encapsulé par des supports de type amidon modifié (société INNOV'IA-17042 La Rochelle-France), silice amorphe (société POLARIS-29170 Pleuven-France) ou bien encore polymère thermoplastique. Les demandes de brevet FR 2 872 683, FR 2 900 940 ou encore WO 2006/000032 peuvent être citées dans ce domaine.

Le carvacrol et le thymol sont des agents anti-chélatants en présence des cations bimétalliques de type Fe²⁺. D'autres études montrent que le carvacrol et le thymol peuvent être complexés dans des systèmes organiques de type ß-cyclodextrine (N. Mulinacci et al., International Journal of Pharmaceutics, 1996, 128, 81-88) dans le but de prouver leur complexation d'une part, et améliorer leur propriétés biopharmaceutiques d'autre part. D'autres auteurs montrent d'ailleurs que le carvacrol et le thymol sont oxydés par l'eau oxygénée H₂O₂ en présence de catalyseurs de type Mn(III) porphyrine complexes (R.L. Rosalia et al., Journal of molecular Catalysis A: Chemical, 1999,137, 41-47) pour former le dérivé de l'hydroquinone et du thymoquinone respectivement, des produits précurseurs à intérêt commercial.

L'adsorption des molécules phénoliques (mono, di et tri-chlorophénol) sur zéolite naturelle a été étudiée à des valeurs de pH variables (4, 6, et 10,5) (Rushdi I. Yousef and Bassam El-Eswed, "The Effect of pH on the Adsorption of Phénol and Chlorophenols onto Natural Zéolite", Colloids and Surfaces A: Physicochemical and Engineering Aspects Volume 334, Issues 1-3, 20 February 2009, Pages 92-99). Les auteurs ont déterminé deux types d'interactions entre la molécule adsorbée et le support. Le premier type est une interaction indépendante du pH des phénols avec les sites hydrophobes de la zéolite. Le second type d'interaction est la complexation, qui dépend du pH des phénolates formés avec les ions métalliques des sites hydrophiles de la zéolite. Le nombre des sites du premier type d'interaction est plus grand que ceux du deuxième type. L'adsorption augmente avec l'augmentation du pH, dû à l'augmentation de la complexation de phénolates avec des ions métalliques de la zéolite. L'adsorption des monochlorophenols par la zéolite est ainsi plus élevée que celle des dichlorophénols et trichlorophénols.

Enfin, une récente revue (M. Ahmaruzzaman, "Adsorption of phenolic compounds on low-cost adsorbents: A review", Advances in Colloid and Interface Science, 143, 2008, 48-67) traite en détails l'adsorption des composés phénoliques sur une large gamme des supports naturels (tel que les argiles, les silices, les zéolithes, le bois, les bio-polymères, le charbon actif, et les sous-produits industriels comme la boue rouge, les cendres, la boue d'hydroxydes métalliques) pour le recyclage des eaux usées.

FR 2 937 507 A1 décrit un procédé de protection d'un principe actif caractérisé en ce qu'il comprend les étapes suivantes: 1) mélanger un principe actif et un sel d'ascorbate en présence d'eau pour obtenir un premier complexe; 2) mélanger ce premier complexe et le monolaurate de glycérol pour obtenir une émulsion. Le principe actif est la curcumine. FR 2 937 507 A1 décrit aussi une émulsion micellaire caractérisée en ce qu'elle comprend des micelles comprenant un coeur comprenant un complexe curcumine - ascorbate et une couche de monolaurate de glycérol. FR 2 937 507 A1 décrit aussi l'utilisation de cette émulsion comme complément alimentaire pour l'homme ou l'animal.

L'ensemble de ces techniques présente cependant un certain nombre d'inconvénients. Les procédés mis en oeuvre sont souvent peu économes en énergie et complexes à réaliser avec des temps de préparation parfois longs, des coûts de réalisation élevés selon la quantité et le type de composés utilisés et des rendements relativement faibles en termes de quantités de composés d'intérêt protégés. La répétabilité de l'organisation moléculaire n'est pas toujours vérifiée. Les résultats obtenus par ces différentes techniques ne sont pas totalement satisfaisants en ce qui concerne la vectorisation des sites d'actions où les composés sont sensés êtres libérés de manière ciblée, notamment en raison de la taille des particules obtenues et de leur exposition aux diverses agressions rencontrées dans la progression au sein de l'appareil digestif.

La fragilité de ces complexes représente également un inconvénient dans la mesure où ils nécessitent des conditions de stockage et/ou de transport particulièrement contrôlées. Le produit final obtenu se révèle également difficile à mettre en oeuvre dans des applications alimentaires en raison des problèmes rencontrés pour le mélanger et l'intégrer de manière homogène dans un substrat. Le problème des mauvaises odeurs liées aux principes actifs emmagasinés n'est pas toujours résolu et l'utilisation du complexe final dans un produit alimentaire peut être limitée à cet égard.

La présente invention vise à palier ces inconvénients en proposant un nouveau matériau capable d'emmagasiner un principe actif d'intérêt dans le domaine de l'alimentation, sous la forme d'une structure organisée en plusieurs couches, capable de masquer les odeurs indésirables et apte à délivrer le principe actif au niveau des sites d'intérêts. Le nouveau matériau selon l'invention est en outre qualifié d'hybride dans la mesure où il peut se présenter sous une forme fluide stable, exempte ou non d'eau, mais également sous une forme pulvérulente stable, selon les étapes du procédé, ceci de manière réversible, ce qui offre la possibilité d'adapter le néo-matériau à l'utilisation finale envisagée et de le conditionner sous une forme avantageuse.

Le néo-matériau selon la présente invention permet de combiner de manière synergique l'association d'un principe actif avec différents composés de nature organique, basée sur des interactions électrostatiques et hydrophobes ainsi qu'un support de nature inorganique qui peut être associé de manière réversible selon la forme souhaitée du néo-matériau.

Plus précisément, la présente invention concerne un néo-matériau hybride de séquestration de principe actif dans une émulsion fluide concentrée caractérisé en ce qu'il comprend :
- un coeur hydrophobe comprenant au moins un principe actif doté d'au moins un cycle aromatique,
- une couche de tensioactif anionique de type sels d'acides carboxyliques lipophiles,
- une phase lipidique monodisperse dispersée dans une phase aqueuse continue, ladite phase lipidique comprenant au moins un tensioactif amphotère lipidique portant au moins deux chaînes d'acides gras, un groupement glycéryl et une tête ionisée,
- une couche superficielle de tensioactif non-ionique, amphiphile portant un élément hydrophobe fonctionnalisé par un, deux ou trois groupes hydroxyles libres et un élément hydrophile mixte constitué par un groupement glycéryl et une chaîne polyéthylène glycol.

Le coeur hydrophobe du néo-matériau selon l'invention comprend tout principe actif doté d'au moins un cycle aromatique capable de former une liaison de type électrostatique forte avec les composés du néo-matériau enrobant directement celui-ci et décrits ci-après. De préférence, ledit au moins un cycle aromatique du principe actif est fonctionnalisé par un groupe hydroxyle et/ou par un groupe formyle permettant d'établir ce type de liaison avec la charge négative de l'oxygène du composé enrobant le principe actif.

Les composés plus particulièrement visés par la présente invention en tant que principes actifs contenus dans le coeur hydrophobe du néo-matériau sont présents dans les huiles essentielles extraites d'origan, de thym, de clou de girofle, de cannelle, de vanille, de piment rouge, de poivre ou un mélange de celles-ci. Il s'agit de préférence des molécules choisies parmi le carvacrol, le thymol, l'eugénol, l'acide cinnamique, l'aldéhyde cinnamique, l'acide vanilique, la vanilline, la capsaïcine, la pipérine ou un mélange de ceux-ci.

Ces composés revêtent en effet toutes les caractéristiques physico-chimiques permettant de les intégrer dans la structure du néo-matériau objet de la présente invention. Ils sont en outre particulièrement avantageux en raison des bénéfices qu'ils peuvent apporter tant sur le plan alimentaire et gustatif, que d'un point de vue biologique et de la santé.

La couche de tensioactif anionique de type sels d'acides carboxyliques lipophiles directement en contact avec le coeur hydrophobe du néo-matériau contenant le ou les principes actifs est de préférence composée de sels d'acides gras cristallisables fusibles entre 30 et 70°C. Les composés de cette couche peuvent de préférence former des complexes avec le principe actif du type chélate à plusieurs chaînons, avec délocalisation des charges électrostatiques. La localisation de chargés préconise une espèce moléculaire à tête ionique à tendance anionique. Dans un mode de réalisation particulier de l'invention, cette couche est composée de sels d'acides gras avec une chaîne carbonée comprenant 12 à 18 atomes de carbone. De préférence, elle est composée de laurate de sodium ou un autre de ses sels.

Cette couche est recouverte d'une autre couche organisée en une bicouche lipidique, constituée d'une phase lipidique monodisperse dispersée dans une phase aqueuse continue, ladite phase lipidique comprenant au moins un tensioactif amphotère lipidique portant au moins deux chaînes d'acides gras, un groupement glycéryl et une tête ionisée. De préférence, cette deuxième couche est composée d'un phospholipide du type lécithine issue de source végétale comme le soja ou le colza par exemple qui présentent d'excellentes propriétés sanitaires.

La bicouche lipidique joue le rôle d'agent émulsifiant, formant des microvésicules multi-lamellaires autour du complexe tensioactif anionique-principe actif. Elle a le pouvoir de masquer au moins pour partie les odeurs qui peuvent être désagréables des principes actifs séquestrés. On note que dans certains cas selon l'invention, il est possible d'intervertir la bicouche lipidique de tensioactif amphothère avec la couche de tensioactif anionique de type sels d'acides carboxyliques. La bicouche lipidique de tensioactif amphothère se retrouve alors en contact direct avec le ou les principes actifs et le tensioactif anionique de type sels d'acides carboxyliques se retrouve alors en position de seconde couche.

Une troisième couche vient ensuite enrober le complexe déjà décrit. Cette couche superficielle est composée de tensioactif non-ionique, amphiphile portant un élément hydrophobe fonctionnalisé par un, deux ou trois groupes hydroxyles libres et un élément hydrophile mixte constitué par un groupement glycéryl et une chaîne polyéthylène glycol. De préférence, l'élément hydrophobe de cette dernière couche est une molécule de ricinoléate ; elle est ainsi composée de préférence de Ricinoléate Glycéryl de PolyEthylène Glycol, PEG-20.

L'un des avantages de la présente invention est de pouvoir adapter la forme du produit final en fonction de l'utilisation envisagée tout en préservant les propriétés protectrices du néo-matériau vis à vis du principe actif emmagasiné et une libération ciblée au niveau des sites d'action. Ainsi, il est possible d'associer au néo-matériau une phase aqueuse afin d'obtenir une émulsion dont la fluidité sera proportionnelle à la quantité de phase aqueuse ajoutée, ceci tout en maintenant les propriétés du néo-matériau. On note que l'addition d'eau permet en outre d'augmenter le pouvoir de masquage d'odeur du néo-matériau ce qui présente un avantage dans le cas de principes actifs volatils dotés d'une odeur désagréable comme dans le cas du carvacrol par exemple.

De manière avantageuse, il est possible d'adapter la fluidité du néo-matériau associé à une phase aqueuse en exposant ce dernier à une étape de lyophilisation. De cette manière, on peut modifier de manière réversible la forme du néo-matériau soit en ajoutant une quantité supplémentaire de phase aqueuse afin d'obtenir une émulsion plus fluide, soit en lyophilisant le néo-matériau afin d'obtenir une suspension lipidique monodisperse fluide exempte d'eau. Cette dernière forme offre l'avantage de permettre un stockage du néo-matériau sans ajout de conservateur. Un retour à l'état d'émulsion fluide concentrée est possible par simple addition d'eau.

Dans certains cas, il peut être souhaitable d'utiliser le néo-matériau selon l'invention non pas sous forme fluide, mais sous une forme pulvérulente solide. A cet effet, le néo-matériau peut être associé à un support inorganique par adsorption, aboutissant à un complexe organique-inorganique se présentant sous la forme d'une poudre homogène non poussiéreuse. Le néo-matériau selon l'invention peut alors comprendre 60 à 80 % d'une émulsion fluide concentrée telle que décrite précédemment, associée à 40 à 20 % d'un support inorganique. De préférence, le support inorganique est de nature silicique.

La présente invention concerne également un procédé permettant d'obtenir un néo-matériau tel que décrit ci-dessus, permettant la protection et la vectorisation d'au moins un principe actif présentant un intérêt dans le domaine de l'alimentation par séquestration dans une émulsion fluide concentrée. Le procédé objet de l'invention se caractérise par sa simplicité, son faible coût économique lié au nombre réduit de réactifs utilisés et à la faible quantité d'énergie nécessaire, la robustesse du complexe obtenu et sa rentabilité en terme d'actif protégé.

Plus précisément, la présente invention concerne un procédé de protection de principe actif par séquestration dans une émulsion fluide concentrée sous forme de néo-matériau hybride caractérisé en ce qu'il comprend les étapes suivantes :
a) faire fondre un tensioactif anionique de type sels d'acides carboxyliques lipophiles par chauffage à une température proche de celle de fusion dudit tensioactif anionique et sous agitation,
b) ajouter tout en maintenant la température et l'agitation jusqu'à dissolution complète :
   - au moins un principe actif hydrophobe doté d'au moins un cycle aromatique,
   - puis au moins un tensioactif amphotère lipidique portant au moins deux chaînes d'acides gras, un groupement glycéryl et une tête ionisée,
   - puis au moins un tensioactif non-ionique, amphiphile portant un élément hydrophobe fonctionnalisé par un, deux ou trois groupes hydroxyles libres et un élément hydrophile mixte constitué par un groupement glycéryl et une chaîne polyéthylène glycol,
c) ajouter la phase aqueuse jusqu'à l'obtention d'une pâte fluide homogène dans les mêmes conditions de températures et d'agitation.
d) arrêter le chauffage et laisser ladite pâte ainsi obtenue revenir à température ambiante tout en maintenant l'agitation,
c) arrêter l'agitation.

Dans un mode de réalisation particulier de l'invention, le tensioactif anionique de type sels d'acides carboxyliques lipophiles utilisé au cours de la première étape est composé de sels d'acides gras cristallisables fusibles entre 30 et 70°C. De préférence, il s'agit de sels d'acides gras avec une chaîne carbonée comprenant 12 à 18 atomes de carbone tel que le laurate de sodium ou un autre de ses sels.

Ledit au moins un principe actif hydrophobe utilisé dans le procédé objet de l'invention est de préférence doté d'au moins un cycle aromatique fonctionnalisé par un groupe hydroxyle et/ou par un groupe formyle. Les composés particulièrement avantageux dans le cadre de l'invention sont issus d'huiles essentielles extraites d'origan, de thym, de clou de girofle, de cannelle, de vanille, de piment rouge, de poivre ou un mélange de celles-ci. Il s'agit de préférence des molécules choisies parmi le carvacrol, le thymol, l'eugénol, l'acide cinnamique, l'aldéhyde cinnamique, l'acide vanilique, la vanilline, la capsaïcine, la pipérine ou un mélange de ceux-ci.

Le tensioactif amphotère lipidique portant au moins deux chaînes d'acides gras, un groupement glycéryl et une tête ionisée est composé de préférence par un phospholipide tel que la lécithine de soja ou de colza par exemple.

Dans une forme variante du procédé objet de la présente invention, on note qu'il est éventuellement possible d'associer dans un premier temps au moins un principe actif tel que défini ci-dessus avec un tensioactif amphotère lipidique portant au moins deux chaînes d'acides gras, un groupement glycéryl et une tête ionisée, ceci directement avant de mettre en contact le complexe ainsi formé avec le tensioactif anionique de type sels d'acides carboxyliques lipophiles.

La dernière couche superficielle du néo-matériau selon la présente invention est obtenue en mettant en contact l'un ou l'autre des deux complexes obtenus selon le procédé décrit ci-dessus avec au moins un tensioactif non-ionique, amphiphile portant un élément hydrophobe fonctionnalisé par un, deux ou trois groupes hydroxyles libres et un élément hydrophile mixte constitué par un groupement glycéryl et une chaîne polyéthylène glycol. De préférence, cette couche est composée de Ricinoléate Glycéryl de PolyEthylène Glycol, PEG-20.

De manière optionnelle, selon la forme sous laquelle on souhaite utiliser le néo-matériau selon l'invention, il est possible de procéder à une étape supplémentaire de lyophilisation visant à éliminer la phase aqueuse du complexe obtenu selon le procédé décrit ci-dessus; Cette étape est réversible dans la mesure où le néo-matériau peut reprendre sa forme initiale d'émulsion fluide concentrée par simple addition d'eau.

Afin d'obtenir un néo-matériau sous forme d'une poudre, le procédé selon l'invention peut encore comprendre une autre étape supplémentaire, qu'il y ait eu préalablement lyophilisation ou non, par l'association du néo-matériau avec un support inorganique, de préférence de nature silicique, au cours d'une étape d'adsorption. Les proportions des phases organiques et inorganiques mises en contact au cours de cette étape sont de l'ordre de 60 à 80 % d'émulsion fluide concentrée telle que décrite précédemment, associée à 40 à 20 % de support inorganique.

Au cours du procédé ainsi décrit, une agitation permanente est maintenue afin d'obtenir le mélange le plus homogène possible de chacun des réactifs mis en contact les uns avec les autres et une taille du néo-matériau final convenable. De préférence, l'agitation est apportée au moyen d'un malaxeur à fort cisaillement de manière à obtenir des particules dont la taille est comprise entre 5 et 200 micromètres.

Le néo-matériau ainsi décrit selon la présente invention constitue donc un excellent support permettant la protection et la vectorisation de principes actifs présentant un intérêt dans le domaine de l'alimentation. Le néo-matériau selon l'invention est donc avantageusement utilisé pour la réalisation de produits alimentaires destinés à l'homme et/ou à l'animal. Les bénéfices apportés par ces produits touchent à la fois le plan gustatif et la santé pour l'homme. Pour l'animal, ils permettent d'améliorer leurs performances zootechniques. Un produit alimentaire comprenant un néo-matériau selon l'invention peut être stabilisé par ajout de divers additifs que l'Homme du métier saura sélectionner afin de préparer toute composition alimentaire destinée à l'homme et/ou l'animal.

### EXEMPLES

Les exemples qui suivent illustrent l'invention afin d'en faire mieux apparaître les caractéristiques et les avantages, sans toutefois en réduire de quelque manière que ce soit la portée.

### 1-Formulation d'un néo-matériau selon l'invention intégrant des molécules de carvacrol, se présentant sous la forme d'une émulsion fluide concentrée :

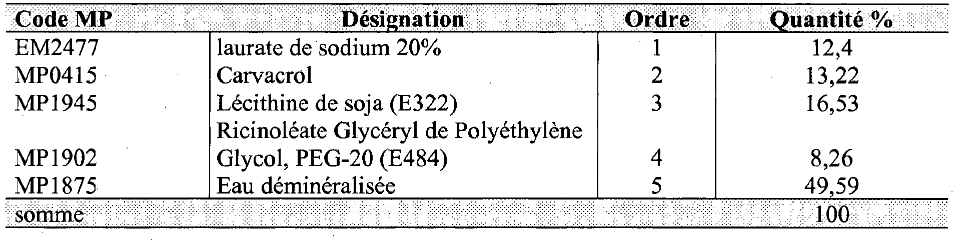

### Caractéristique de l'émulsion:

Physiques : aspect pâteux, crème, couleur jaunâtre claire, stable thermodynamiquement, stable aux chocs extérieurs (Ultrasons), taille moyenne des particules 8 Micromètres, émulsion soluble dans l'eau, soluble dans les solvants organiques, émulsion réversible.

Chimiques : émulsion fluide à pH moyen de 7,5, émulsion fluide stable thermiquement entre T= 25-60 °C, émulsion fluide stable à des pH (5, 6 et 7).

### Paramètres clés :

- la réduction de la taille des particules de l'émulsion fluide est réalisée par agitation Ultraturrax,
- la nature des lipides utilisés (sels d'acides gras cristallisables à 25 °C) contribue à l'obtention des particules solides en suspension,
- l'addition de la phase aqueuse à la dispersion lipidique à 50 °C provoque un changement d'aspect et de couleur pour former une émulsion fluide huile dans l'eau (O/W),
- l'addition de la phase aqueuse à la dispersion lipidique provoque un masquage d'odeur du phénol (carvacrol) par séquestration,
- la teneur en carvacrol dans l'émulsion fluide varie entre 1 et 50 %.

### 2-Formulation d'un néo-matériau selon l'invention intégrant des molécules de carvacrol, se présentant sous la forme de poudre homogène :

L'émulsion synthétisée à 46 °C est adsorbée physiquement sur silice poudre initialement à 25 °C. L'opération est réalisée dans un malaxeur. La température du mélange à t=0 est égale à 33 °C et chute avec le temps à 25 °C. Le néo-matériau hybride (organique/inorganique) poudre est ainsi obtenu selon les proportions suivantes.

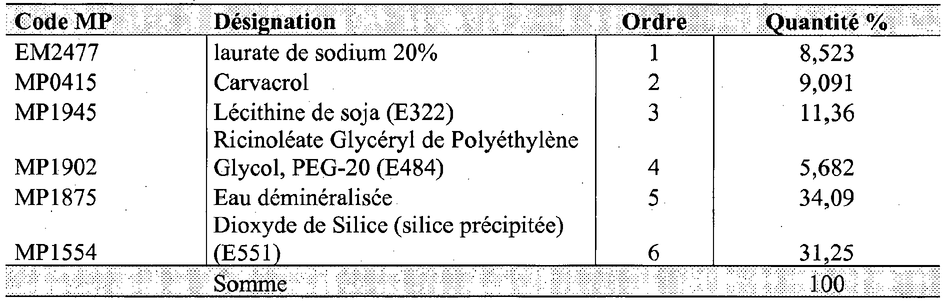

### Caractéristique de l'émulsion :

Physiques : poudre solide non poussiéreuse, couleur blanc sale, stable thermodynamiquement, stable thermiquement à 103 °C, stable aux chocs extérieurs (Ultrasons), taille moyenne des particules solides 150 Micromètres.

Chimiques : néo-matériau stable dans l'eau, stable dans les conditions physiologiques pH acides (< 3).

### 3-Conditionnement du néo-matériau selon l'invention:

Le néo-matériau peut être conditionné sous deux formes :
L'émulsion fluide concentrée contenant de l'eau (non lyophilisée) peut être stabilisée contre l'oxydation par l'ajout d'un antioxydant naturel, de préférence le Butyl Hydroxy Toluène (BHT). L'émulsion est stable dans un milieu isolé de l'extérieur durant le stockage (pot fermé).

La suspension lipidique fluide mono-disperse exempte d'eau (lyophilisée) peut être stockée dans un milieu isolé de l'extérieur (pot fermé). L'ajout d'eau après stockage provoque la reconstitution de l'émulsion (particules huiles dans l'eau).

### 4-Préparation d'un néo-matériau selon l'invention intégrant des molécules de carvacrol en tant que principe actif (PA), se présentant sous la forme d'une émulsion fluide concentrée :

1 -Chauffer le laurate de sodium à 50°C et sous agitation mécanique Relevés :
   La T° de départ du laurate de sodium= 22.7°C
   La durée de chauffage = 45 minutes
   La consigne de chauffage = 50°C
2 -Introduire dans le laurate fondu le PA, et sous agitation mécanique atteindre 46°C Relevés :
   T°C du laurate de sodium = 52.2°C
   T°C du PA = 23.5°C
   La T° de départ du mélange laurate de sodium + PA = 39.5°C
3 -Le mélange 2 est placé sur une plaque chauffante sous agitation mécanique pour maintenir le mélange à 46°C
4 -Introduire la lécithine de soja avec la BHT (mélange mère) à la T°C de 50°C pour la fonte de la BHT
   Dissoudre la BHT
   Cela contribue à diminuer la viscosité de la lécithine de soja et facilite son incorporation dans l'émulsion.
5 -Ajouter le mélange lécithine de soja et BHT (mélange mère) en filet sous UT Relevés :
6 -Ajoute le Ricinoléate Glycéryl de Polyéthylène Glycol, PEG-20 en filet :
7 -Ajouter l'eau déminéralisée en filet
   à T° de l'eau déminéralisée = 23.4°C

### 5-Effet du pH sur la stabilité du néo-matériau selon l'invention intégrant des molécules de carvacrol, se présentant sous la forme d'une émulsion fluide concentrée:

Une émulsion fluide concentrée a été réalisée selon l'exemple 1. Des tests ont été effectués afin de déterminer les cinétiques d'analyse *in vitro* de l'émulsion fluide concentrée dans des solutions tampons à pH variable (3, 5, 6, 7) à 39°C. La dose du carvacrol étudiée était 6,6g/Litre, soit un rapport (solutionₜₐₘₚₒₙ/carvacrol) de 151,15. La cinétique d'incubation a été étudiée entre 0 et 24h.

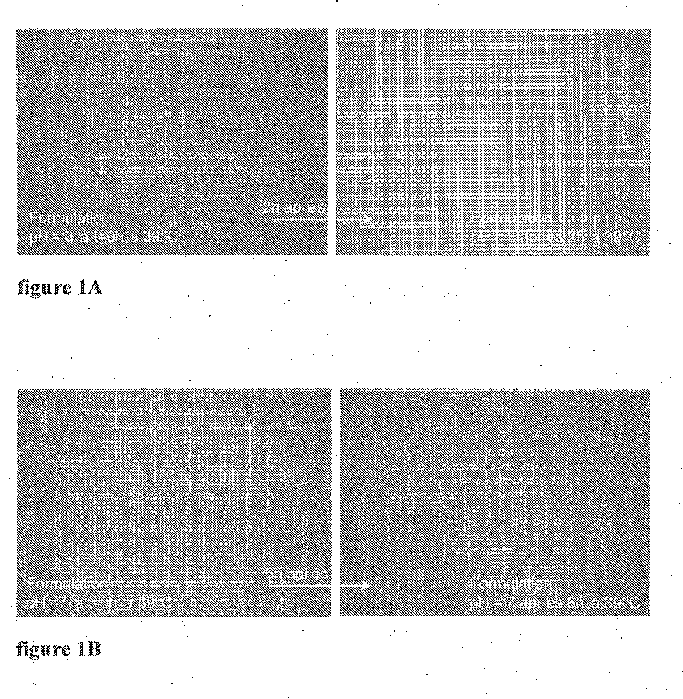

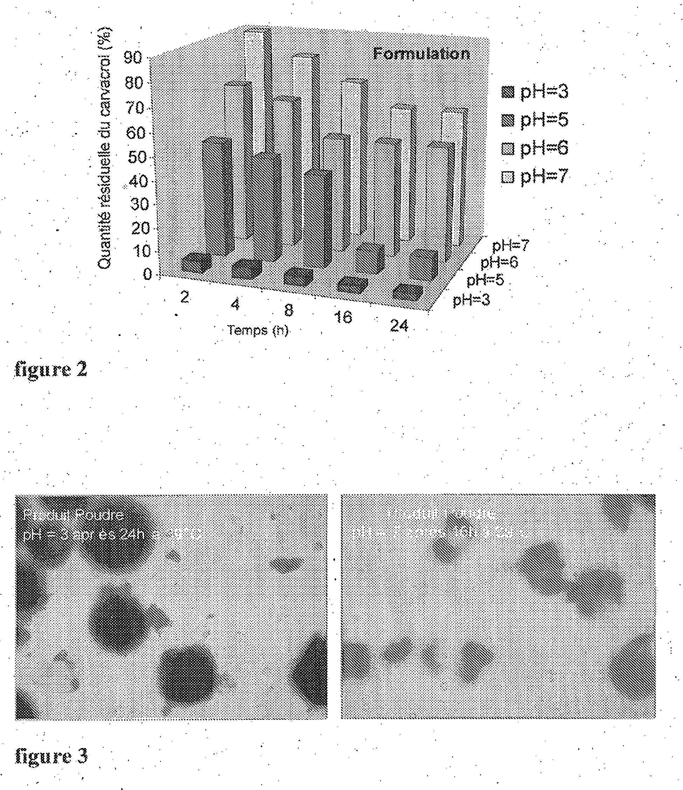

Les résultats de la cinétique d'incubation de l'émulsion à 39°C ont été suivis d'une analyse microscopique et sont illustrés par les figures 1A, 1B et 2.

La figure 1A représente les clichés de microscopie obtenus avec l'émulsion fluide concentrée, appelée « formulation », incubée dans une solution tampon (pH=3) à 39°C avant et après 2h.

La figure 1B représente les clichés de microscopie de la même émulsion fluide concentrée, appelée « formulation », incubée dans une solution tampon (pH=7) à 39°C avant et après 6h.

La figure 2 représente la quantité résiduelle de carvacrol dans une émulsion fluide concentrée selon l'invention en fonction du pH de la solution tampon.

Au regard de ces résultats, il apparaît que :
- La formulation est dégradée jusqu'à 95% en milieu acide pH=3 au bout de 2h où le carvacrol est libéré,
- La formulation est stable jusqu'à 50% en milieu pH=5, 6.
- La formulation est stable jusqu'à 70% en milieu pH=7.

La libération du carvacrol est donc fortement reliée à la stabilité de la formulation. Ce résultat obtenu montre que la libération du carvacrol séquestré dans l'émulsion fluide concentrée est obtenue plus rapidement en milieu acide pH=3 qu'en milieu légèrement acide (pH=5 et 6) ou neutre (pH=7).

### 6-Effet du pH sur la stabilité du néo-matériau selon l'invention intégrant des molécules de carvacrol, se présentant sous la forme de poudre homosène :

Une poudre homogène a été réalisée selon l'exemple 2. Les tests effectués en solution tampon à pH variable pour obtenir les cinétiques d'analyse *in vitro* de l'émulsion fluide concentrée ont été reproduits avec le néo-matériau selon l'invention se présentant sous la forme de poudre homogène.

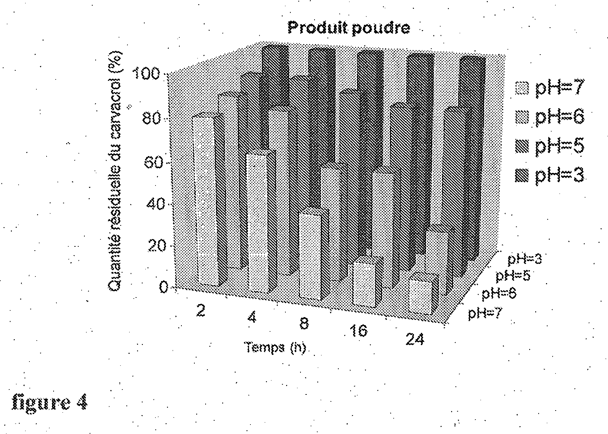

Les résultats de ces cinétiques sont illustrés par les figures 3 et 4.

La figure 3 représente à gauche un cliché de microscopie obtenu avec la poudre homogène selon l'invention, appelée « produit poudre», incubée dans une solution tampon (pH=3) à 39°C après 24h. A droite, on observe un cliché de microscopie de la même poudre homogène selon l'invention, appelée « produit poudre», incubée dans une solution tampon (pH=7) à 39°C après 16h.

La figure 4 représente la quantité résiduelle de carvacrol dans un néo-matériau selon l'invention se présentant sous la forme de poudre homogène en fonction du pH de la solution tampon.

Au regard de ces résultats, il apparaît que :
- Le produit fini (poudre) est stable jusqu'à 100% en milieu acide pH=3 au bôut de 24h. Ici aucune libération du carvacrol n'est observée en microscopie optique.
- Le produit fini (poudre) possède une stabilité décroissante dans un milieu neutre (pH=7). Ici la libération du carvacrol est contrôlée, elle se fait au fur et à mesure dans le temps.

La libération du carvacrol est donc fortement reliée à la stabilité du produit fini. Ce résultat obtenu montre que la libération du carvacrol séquestré dans le produit fini est obtenue plus rapidement en milieu pH=7 qu'en milieu acide (pH=3) ou légèrement acide (pH=5 et 6).

Les résultats de ces études permettant de constater les éléments suivants :
- l'émulsion fluide concentrée selon l'invention est stable pour t < 2h en milieu acide (pH=3),
- l'émulsion fluide concentrée selon l'invention est stable dans un milieu légèrement acide (pH=5 et 6) et neutre (pH=7) pour t < 6h,
- le néo-matériau selon l'invention se présentant sous la forme de poudre homogène est stabilisé en milieu acide (pH=3)
- le néo-matériau selon l'invention se présentant sous la forme de poudre homogène permet la vectorisation et la livraison des microvésicules au fur et à mesure dans le temps (contrôlé).

Il est ainsi possible d'adapter la forme du néo-matériau selon l'invention en fonction du site d'action visée, ceci au moyen d'un procédé simple et économe tel que décrit dans la présente demande, offrant l'avantage de permettre de passer d'une forme à une autre de manière réversible.

## Revendications

1. Néo-matériau hybride de séquestration de principe actif dans une émulsion fluide concentrée **caractérisé en ce qu'**il comprend :
- un coeur hydrophobe comprenant au moins un principe actif doté d'au moins un cycle aromatique,
- une couche de tensioactif anionique de type sels d'acides carboxyliques lipophiles,
- une phase lipidique monodisperse dispersée dans une phase aqueuse continue, ladite phase lipidique comprenant au moins un tensioactif amphotère lipidique portant au moins deux chaînes d'acides gras, un groupement glycéryl et une tête ionisée,
- une couche superficielle de tensioactif non-ionique, amphiphile portant un élément hydrophobe fonctionnalisé par un, deux ou trois groupes hydroxyles libres et un élément hydrophile mixte constitué par un groupement glycéryl et une chaîne polyéthylène glycol.

2. Néo-matériau hybride de séquestration de principe actif selon la revendication 1, **caractérisé en ce que** ledit au moins un principe actif est doté d'au moins un cycle aromatique fonctionnalisé par un groupe hydroxyle et/ou par un groupe formyle.

3. Néo-matériau hybride de séquestration de principe actif selon la revendication 1, **caractérisé en ce que** ledit au moins un principe actif provient d'une huile essentielle extraite d'origan, de thym, de clou de girofle, de cannelle, de vanille, de piment rouge, de poivre ou un mélange de celles-ci, ledit au moins un principe actif étant choisi parmi les molécules suivantes : le carvacrol, thymol, l'eugénol, l'acide cinnamique, l'aldéhyde cinnamique, l'acide vanilique, la vanilline, la capsaïcine, la pipérine ou un mélange de ceux-ci.

4. Néo-matériau hybride de séquestration de principe actif selon l'une quelconque des revendications précédentes, **caractérisé en ce que** la couche de tensioactif anionique de type sels d'acides carboxyliques lipophiles est composée de sels d'acides gras cristallisables fusibles entre 30 et 70°C, lesdits sels d'acides gras ayant une chaîne carbonée comprenant 12 à 18 atomes de carbone.

5. Néo-matériau hybride de séquestration de principe actif selon l'une quelconque des revendications précédentes, **caractérisé en ce que** la couche de tensioactif anionique de type sels d'acides carboxyliques lipophiles est composée de laurate de sodium ou un autre de ses sels.

6. Néo-matériau hybride de séquestration de principe actif selon l'une quelconque des revendications précédentes, **caractérisé en ce que** la phase lipidique monodisperse est composée de lécithine de soja ou de colza.

7. Néo-matériau hybride de séquestration de principe actif selon l'une quelconque des revendications précédentes, **caractérisé en ce que** l'élément hydrophobe de la couche superficielle de tensioactif non-ionique amphiphile est une molécule de ricinoléate.

8. Néo-matériau hybride de séquestration de principe actif selon l'une quelconque des revendications précédentes, **caractérisé en ce qu'il** est associé à une phase aqueuse et/ou à un support inorganique.

9. Procédé de protection de principe actif par séquestration dans une émulsion fluide concentrée sous forme de néo-matériau hybride **caractérisé en ce qu'il** comprend les étapes suivantes:
a) faire fondre un tensioactif anionique de type sels d'acides carboxyliques lipophiles par chauffage à une temperatute proche de celle de fusion dudit tensioactif anionique et sous agitation,
b) ajouter tout en maintenant la température et l'agitation jusqu'à dissolution complète :
- au moins un principe actif hydrophobe doté d'au moins un cycle aromatique,
- puis au moins un tensioactif amphotère lipidique portant au moins deux chaînes d'acides gras, un groupement glycéryl et une tête ionisée,
- puis au moins un tensioactif non-ionique, amphiphile portant un élément hydrophobe fonctionnalisé par un, deux ou trois groupes hydroxyles libres et un élément hydrophile mixte constitué par un groupement glycéryl et une chaîne polyéthylène glycol,
c) ajouter la phase aqueuse jusqu'à l'obtention d'une pâte fluide homogène dans les mêmes conditions de températures et d'agitation.
d) arrêter le chauffage et laisser ladite pâte ainsi obtenue revenir à température ambiante tout en maintenant l'agitation,
c) arrêter l'agitation.

10. Procédé de protection de principe actif selon la revendication 9 **caractérisé en ce que** ledit au moins un principe actif hydrophobe est doté d'au moins un cycle aromatique fonctionnalisé par un groupe hydroxyle et/ou par un groupe formyle.

11. Procédé de protection de principe actif selon la revendication 9 ou 10 **caractérisé en ce que** le néo-matériau obtenu est soumis à un traitement de lyophilisation, le néo-matériau obtenu étant adsorbé sur un support inorganique de nature silicique.

12. Procédé de protection de principe actif selon l'une quelconque des revendications 9 à 11 **caractérisé en ce que** l'agitation est apportée au moyen d'un malaxeur à fort cisaillement de manière à obtenir des particules dont la taille est comprise entre 5 et 200 micromètres.

13. Utilisation du néo-matériau selon l'une quelconque des revendications 1 à 8 pour la réalisation de produits alimentaires destinés à l'homme et/ou l'animal.

14. Produit alimentaire comprenant un néo-matériau selon l'une quelconque des revendications 1 à 8 **caractérisé en ce qu'**il est stabilisé par ajout d'additifs.

## Patentansprüche

1. Hybrides Neumaterial zur Sequestration eines Aktivstoffes in einer fluiden konzentrierten Emulsion
**dadurch gekennzeichnet,**
**dass** es aufweist:
- einen hydrophoben Kern mit zumindest einem Aktivstoff, der mit zumindest einem aromatischen Zyklus dotiert ist,
- eine Schicht aus einem anionischen Tensid vom Typ lipophiler Carbonsäuresalze,
- eine monodisperse Lipidphase, die in einer kontinuierlichen wässrigen Phase dispergiert ist, und die Lipidphase zumindest ein amphoteres Lipidtensid aufweist, das zumindest zwei Fettsäureketten, eine Glycerylgruppe und einen ionisierten Kopf trägt,
- eine Oberflächenschicht aus einem nicht-ionischen Tensid, das amphiphil ist und einen hydrophoben Bestandteil trägt, der durch eine, zwei oder drei freie Hydroxylgruppen und einem gemischten hydrophilen Bestandteil funktionalisiert ist, der durch eine Glycerylgruppe und eine Polyethylenglykolkette gebildet ist.

2. Hybrides Neumaterial zur Sequestration eines Aktivstoffes nach Anspruch 1,
**dadurch gekennzeichnet,**
**dass** zumindest ein Aktivstoff durch zumindest einen aromatischen Zyklus dotiert ist, der durch eine Hydroxylgruppe und/oder durch eine Phenylgruppe funktionalisiert ist.

3. Hybrides Neumaterial zur Sequestration eines Aktivstoffes nach Anspruch 1,
**dadurch gekennzeichnet,**
**dass** der zumindest ein Aktivstoff ein ätherisches Öl enthält, das aus Oregano, Thymian, Gewürznelke, Zimt, Vanille, Chili, Pfeffer oder einer Mischung dieser extrahiert ist, und der zumindest eine Aktivstoff ausgewählt ist aus den folgenden Molekülen: dem Carvacrol, Thymol, Eugenol, Zimtsäure, Zimtaldehyd, Vanillinsäure, Vanillin, Capsaicin, Piperin oder einer Mischung davon.

4. Hybrides Neumaterial zur Sequestration eines Aktivstoffes nach einem der vorstehenden Ansprüche,
**dadurch gekennzeichnet,**
**dass** die Schicht aus einem anionischen Tensid vom Typ lipophiler Carboxylsäuresalze aus Fettsäuresalzen zusammengesetzt ist, die kristallisierbar und zwischen 30°C und 70°C schmelzbar sind, und die Fettsäuresalze eine Kohlenstoffkette mit 12 bis 18 Kohlenstoffatomen aufweisen.

5. Hybrides Neumaterial zur Sequestration eines Aktivstoffes nach einem der vorgenannten Ansprüche,
**dadurch gekennzeichnet,**
**dass** die Schicht eines anionischen Tensids vom Typ lipophiler Carbonsäuresalze zusammengesetzt ist aus Natriumlaurat oder einem anderen seiner Salze.

6. Hybrides Neumaterial zur Sequestration eines Aktivstoffes nach einem der vorgenannten Ansprüche,
**dadurch gekennzeichnet,**
**dass** die monodisperse Lipidphase zusammengesetzt ist aus Lecithin von Soja oder von Raps.

7. Hybrides Neumaterial zur Sequestration eines Aktivstoffes nach einem der vorgenannten Ansprüche,
**dadurch gekennzeichnet,**
**dass** der hydrophobe Bestandteil der Oberflächenschicht des nicht-ionischen amphiphilen Tensids ein Rizinoleatmolekül ist.

8. Hybrides Neumaterial zur Sequestration eines Aktivstoffes nach einem der vorgenannten Ansprüche,
**dadurch gekennzeichnet,**
**dass** es mit einer wässrigen Phase und/oder einem anorganischen Träger verbunden ist.

9. Verfahren zum Schutz eines Aktivstoffes durch Sequestration in einer konzentrierten fluiden Emulsion in der Form des hybriden Neumaterials,
**dadurch gekennzeichnet,**
**dass** es die folgenden Schritte aufweist:
a) Schmelzen eine anionischen Tensids von lipophilen Carbonsäuresalzen durch Erhitzen auf eine Temperatur nahe der Schmelztemperatur des anionischen Tensids und unter Rühren, und
b) vollständiges Zugeben unter Beibehaltung der Temperatur und des Rührens bis eine vollständige Auflösung erreicht ist:
- zumindest eines hydrophoben Aktivstoffes, der zumindest mit einem aromatischen Zyklus dotiert ist,
- zumindest eines lipiden amphoteren Tensids, das zumindest zwei Fettsäureketten, eine Glycerylgruppe und einen ionisierten Kopf trägt,
- zumindest eines nicht-ionischen amphiphilen Tensids, das einen hydrophoben Bestandteil trägt, der zumindest durch einen, zwei oder drei freie Hydroxylgruppen und einen hydrophilen Mischbestandteil funktionalisiert ist, der durch eine Glycerylgruppe und eine Polyethylenglykolkette gebildet ist,
c) Zugeben der wässrigen Phase zum Erhalt einer fluiden homogenen Paste unter den gleichen Bedingungen der Temperatur und des Rührens.
d) Beenden des Erhitzens und Belassen der Paste, die so erhalten wird, zum Wiedererlangen der Raumtemperatur unter Beibehalten des Rührens,
e) Beenden des Rührens.

10. Verfahren zum Schutz eines Aktivstoffes nach Anspruch 9,
**dadurch gekennzeichnet,**
**dass** der zumindest eine hydrophobe Aktivstoff mit zumindest einem aromatischen Zyklus dotiert ist, der durch eine Hydroxylgruppe und/oder durch eine Formylgruppe funktionalisiert ist.

11. Verfahren zum Schutz eines Aktivstoffes nach Anspruch 9 oder 10,
**dadurch gekennzeichnet,**
**dass** das erhaltene Neumaterial einer Lyophilisationsbehandlung unterzogen wird, wobei das erhaltene Neumaterial auf einem anorganischen Träger einer Silizidart adsorbiert ist.

12. Verfahren zum Schutz eines Aktivstoffes nach einem der Ansprüche 9 bis 11,
**dadurch gekennzeichnet,**
**dass** das Rühren mittels eines Mischers starker Scherung auf eine Weise durchgeführt wird, um Teilchen zu erhalten, deren Größe zwischen 5 und 200 Mikrometern liegt.

13. Verwendung des Neumaterials nach einem der Ansprüche 1 bis 8 zur Herstellung von Ernährungsprodukten, die für Mensch und/oder Tier bestimmt sind.

14. Ernährungsprodukt mit einem Neumaterial nach einem der Ansprüche 1 bis 8,
**dadurch gekennzeichnet,**
**dass** es durch die Zugabe von Additiven stabilisiert ist.

## Claims

1. Novel hybrid material for sequestering active principle in a concentrated fluid emulsion, **characterised in that** it comprises:
- a hydrophobic core comprising at least one active principle provided with at least one aromatic ring,
- a layer of anionic surfactant of lipophilic carboxylic acid salt type,
- a monodisperse lipid phase dispersed in a continuous aqueous phase, said lipid phase comprising at least one lipid amphoteric surfactant bearing at least two fatty acid chains, a glyceryl group and an ionised head,
- a surface layer of amphiphilic non-ionic surfactant bearing a hydrophobic element functionalised by one, two or three free hydroxyl groups and a mixed hydrophilic element constituted by a glyceryl group and a polyethylene glycol chain.

2. Novel hybrid material for sequestering active principle according to claim 1, **characterised in that** said at least one active principle is provided with at least one aromatic ring functionalised by a hydroxyl group and/or by a formyl group.

3. Novel hybrid material for sequestering active principle according to claim 1, **characterised in that** said at least one active principle is obtained from an essential oil extracted from oregano, thyme, clove, cinnamon, vanilla, red chilli, pepper or a mixture thereof, said at least one active principle being selected from the following molecules: carvacrol, thymol, eugenol, cinnamic acid, cinnamic aldehyde, vanillic acid, vanillin, capsaicin, piperine or a mixture thereof.

4. Novel hybrid material for sequestering active principle according to any one of the preceding claims, **characterised in that** the layer of anionic surfactant of lipophilic carboxylic acid salt type is composed of crystallisable fatty acid salts fusible between 30 and 70°C, said fatty acid salts having a carbon chain comprising 12 to 18 carbon atoms.

5. Novel hybrid material for sequestering active principle according to any one of the preceding claims, **characterised in that** the layer of anionic surfactant of lipophilic carboxylic acid salt type is composed of sodium laurate or another sodium salt.

6. Novel hybrid material for sequestering active principle according to any one of the preceding claims, **characterised in that** the monodisperse lipid phase is composed of soya or rapeseed lecithin.

7. Novel hybrid material for sequestering active principle according to any one of the preceding claims, **characterised in that** the hydrophobic element of the surface layer of amphiphilic non-ionic surfactant is a ricinoleate molecule.

8. Novel hybrid material for sequestering active principle according to any one of the preceding claims, **characterised in that** it is associated with an aqueous phase and/or with an inorganic substrate.

9. Method of protecting active principle by sequestration in a concentrated fluid emulsion in the form of a novel hybrid material, **characterised in that** it comprises the following steps:
a) melt an anionic surfactant of lipophilic carboxylic acid salt type by heating to a temperature close to the melting point of said anionic surfactant while stirring,
b) add the following while maintaining the temperature and stir until completely dissolved:
- at least one hydrophobic active principle provided with at least one aromatic ring,
- then at least one lipid amphoteric surfactant bearing at least two fatty acid chains, a glyceryl group and an ionised head,
- then at least one amphiphilic non-ionic surfactant bearing a hydrophobic element functionalised by one, two or three free hydroxyl groups and a mixed hydrophilic element constituted by a glyceryl group and a polyethylene glycol chain,
c) add the aqueous phase until a homogeneous fluid paste is obtained in the same conditions of temperature and stirring.
d) stop heating and leave said paste thus obtained to cool to room temperature while stirring,
e) stop stirring.

10. Method of protecting active principle according to claim 9, **characterised in that** said at least one hydrophobic active principle is provided with at least one aromatic ring functionalised by a hydroxyl group and/or by a formyl group.

11. Method of protecting active principle according to claim 9 or 10, **characterised in that** the novel material obtained is subjected to a lyophilisation treatment, the novel material obtained being adsorbed on an inorganic substrate of silicic nature.

12. Method of protecting active principle according to any one of claims 9 to 11, **characterised in that** stirring is provided by means of a high-shear mixer so as to obtain particles between 5 and 200 microns in size.

13. Use of the novel material according to any one of claims 1 to 8 for producing food products for human and/or animal consumption.

14. Food product comprising a novel material according to any one of claims 1 to 8, **characterised in that** it is stabilised by the addition of additives.
